# DEMANDE DE BREVET EUROPEEN

(11) **EP 4 760 831 A1**
(43) Date de publication de la demande: **17.06.2026**
(21) Numéro de dépôt: 25223276.4
(22) Date de dépôt: 15.12.2025
(51) Int. Cl.: H01M 8/248, H01M 8/2475, H01M 8/04007, C25B 1/042, H01M 8/2432, H01M 8/2485, C25B 9/05, C25B 9/75, H01M 8/12

(54) **RÉACTEUR ÉLECTROCHIMIQUE SOUS PRESSION**

(30) Priorité: 16.12.2024 FR 2414243
(71) Demandeur: Commissariat à l'Energie Atomique et aux Energies Alternatives, 75015 Paris (FR)
(72) Inventeur: VULLIEZ, KARL, 38054 GRENOBLE Cedex 09 (FR)
(74) Mandataire: Hautier IP

(57) **Abrégé**

L'invention concerne un réacteur électrochimique (1), configuré pour recevoir un empilement (10), le réacteur comprenant une plaque d'appui (22), l'empilement étant positionné en contact avec la plaque d'appui, caractérisé en ce que le réacteur comprend en outre un dôme (30), présentant un volume interne (Vᵢₙₜ), destiné à recevoir l'empilement, de la fritte de verre (40) liquide présentant un volume (Vₗ) et une face supérieure dite surface libre (41) et configurée pour recouvrir l'empilement, le volume interne comprenant en outre un gaz de couverture (42) positionné en contact de la surface libre du volume de fritte liquide, le gaz de couverture étant configuré pour être mis sous pression par un module à une pression de serrage (Ps), celle-ci étant configuré de sorte à maintenir en compression l'empilement sur la plaque d'appui sous un effort mécanique proportionnel à la pression de serrage.

## Description

### DOMAINE TECHNIQUE

La présente invention concerne le domaine des piles à combustibles à oxydes solides (SOFC) et celui de l'électrolyse de l'eau à haute température également à oxydes solides (SOEC). Plus précisément, l'invention concerne le maintien d'un empilement utilisé dans les piles à combustibles de types SOFC et SOEC.

### ETAT DE LA TECHNIQUE

Les systèmes de production de gaz et/ou d'électricité par pile à combustible à oxyde solide relèvent de deux grands axes technologiques : les systèmes tubulaires et les systèmes planaires. Dans le cadre des technologies planaires, les systèmes SOEC (de l'anglais « Solid Oxide Electrolysis Cells », en français « cellules d'électrolyse à oxyde solide ») ou SOFC (de l'anglais « Solid Oxide Fuel Cells », en français « pile à combustible à oxyde solide ») sont constitués d'un empilement alterné d'une partie active, la cellule électrochimique, typiquement en céramique, et de plaques bipolaires métalliques.

L'empilement comprend ainsi une pluralité de plaques d'interconnecteurs fines montées entre deux plaques terminales rigides qui sont soumises à un différentiel de tension. Afin d'assurer la continuité électrique de nombreux étages de ces structures et l'alimentation de chacune des cellules montées en série dans l'empilement, il est nécessaire d'exercer un effort de compression sur l'empilement afin d'initier et de maintenir en appui les zones de contact. Un défaut de compression, limitant le passage du courant dans la structure multicouche se traduit par une augmentation des pertes ohmiques dans l'empilement et à des échauffements. En fonctionnement, garantir une bonne compression de l'empilement est un prérequis incontournable pour assurer son bon fonctionnement.

Dans les concepts industriels actuels, les modules regroupant plusieurs empilements montés dans une même enceinte chauffante sont généralement serrés par des dispositifs mécaniques externes capable de maintenir un effort de compression quasi-constant en s'accommodant des dilatations thermiques des composants.

Ces dispositifs mécaniques externes peuvent être solidaires de l'empilement. On parle de montage auto-serrant et ils permettent de maintenir l'empilement comprimé entre deux brides épaisses reliées par des tirants filetés. Les montages auto-serrant montrent cependant des limites techniques pour des empilements de grandes dimensions.

Ces dispositifs mécaniques externes peuvent également être déportés. L'empilement est alors monté sur un socle rigide en appui sur la sole du four de l'enceinte chauffante et est comprimé par une traverse mise en appui par un dispositif externe. Les dispositifs de serrage externes présentent de nombreux inconvénients en termes d'intégration notamment quand il s'avère nécessaire de les déporter à l'extérieur des enceintes thermiques.

De plus, les dispositifs externes maintenant un effort constant doivent, afin d'accommoder les variations géométriques au cours des cycles thermiques, intégrer des éléments élastiques. Il est délicat d'intégrer à l'intérieur d'enceintes chauffantes ces éléments élastiques. Ces derniers doivent donc être réaliser dans des alliages spéciaux compatibles avec les conditions d'opération des empilements. Ainsi l'application d'un effort de compression sur un empilement ou sur un module comprenant une pluralité d'empilement positionné dans une enceinte chauffante est, en raison des hautes températures d'utilisation, techniquement très complexe.

Un objectif de l'invention est de proposer une solution permettant de simplifier l'application de cet effort de compression sur un empilement positionné dans une enceinte chauffante.

D'autres objectifs peuvent être atteint par cette solution.

### RESUME

Pour atteindre cet objectif, selon un mode de réalisation on prévoit un réacteur électrochimique, configuré pour recevoir un empilement présentant une première face et une deuxième face opposée à la première face et au moins une paroi externe reliant la première face à la deuxième face et configuré pour fonctionner à une température d'opération, le réacteur comprenant :
- un support configuré pour assurer le passage des gaz d'alimentation de l'empilement, le support comprenant une plaque d'appui, l'empilement étant positionné de sorte à avoir sa deuxième face en contact avec la plaque d'appui,
- un dôme de fermeture, présentant un volume interne, destiné à recevoir l'empilement et à être fixé hermétiquement sur le support,
- de la fritte de verre présentant un volume de fritte de verre et positionnée dans le volume interne, et configurée pour effectuer une transition de phase à température d'opération de l'empilement de sorte à former de la fritte de verre liquide présentant un volume de fritte de verre liquide et configurée en outre pour recouvrir l'empilement, le volume de fritte de verre liquide étant inférieur au volume interne et présentant une face supérieure dite surface libre,
Caractérisé en ce que le volume interne comprend en outre un gaz dit gaz de couverture, le gaz de couverture étant positionné au-dessus et en contact de la surface libre du volume de fritte liquide, le gaz de couverture étant configuré pour être mis sous pression à une pression de serrage par un module de mise sous pression, la pression de serrage étant configuré de sorte à maintenir en compression l'empilement sur la plaque d'appui sous un effort mécanique proportionnel à la pression de serrage.

Ainsi, l'invention permet de maintenir par effet hydrostatique la pression exercée sur la face libre du verre et est transmise intégralement et de manière homogène sur la plaque terminale de l'empilement et ce sans nécessité des composants mécaniques.

Avantageusement, l'effort de compression qui est transmis à l'empilement est ajustable en faisant varier la pression interne. Le dispositif proposé constitue ainsi un système actif permettant d'ajuster en continu l'effort de compression en fonction de la pression interne de l'empilement.

De plus, un autre avantage du concept est d'assurer une très haute étanchéité de l'empilement. En effet, les parois externes de l'empilement, l'interface de l'empilement avec sa plaque d'appui manifold et l'interface entre le dôme et la plaque d'appui sont dans le bain de verre, aussi ce n'est plus des étanchéités au gaz qui doivent être assurés par les joints et scellements, mais une étanchéité au verre (un liquide visqueux). La seule étanchéité au gaz a assurée est celle du bouchon soudé sur le dôme. En termes de fuite au niveau de l'empilement, les gaz d'alimentation étant à une pression inférieure à celle du fluide externe, ils ne peuvent plus sortir car soumis à une contre-pression. Les défauts de type fissures dans les scellements, qui peuvent être responsables dans un stack des fuites gaz, présentent des géométries (dimensions micrométriques, forte tortuosité, effet de capillarité, très haute viscosité) qui ne permettent pas le passage d'un fluide visqueux tel que le verre.

Selon un autre aspect on prévoit un procédé de mise en pression d'un réacteur électrochimique tel que décrit ci-dessus, dans lequel le procédé comprend :
- un positionnement de l'empilement sur le support,
- un positionnement et une fixation du dôme sur le support de sorte à entourer l'empilement,
- un remplissage du dôme avec de la fritte de verre par une ouverture,
- une fixation d'un bouchon dans l'ouverture de sorte à rendre le volume interne du dôme hermétique,
- une augmentation de la température dans le réacteur de sorte à atteindre la température d'opération,
- une mise sous pression du réacteur jusqu'à une pression de serrage par le module de mise sous pression.

Ainsi, la mise en place de cette compression est facilitée et rapide à mettre en place.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A et 1B représentent un support selon un mode de réalisation de l'invention.
Les figures 2A et 2B représentent un dôme selon un mode de réalisation de l'invention.
Les figures 3A et 3B représentent l'empilement positionné sur le support selon un mode de réalisation de l'invention.
Les figures 4A et 4B représentent la fermeture du dôme sur le support selon un mode de réalisation de l'invention.
Les figures 5A à 5D représentent l'insertion de la fritte de verre et la mise sous pression du dispositif selon un mode de réalisation de l'invention.
Les figures 6A et 6B représentent un autre mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la pression de serrage est comprise entre 500 hPa et 200kPa. Ces valeurs de pression de pression Ps faibles, permettent d'envisager la réalisation d'une enceinte pressurisée fonctionnant à haute température compatible tant au niveau des interfaces d'étanchéité que des contraintes thermomécaniques. Cette pression de serrage permet ainsi de transmettre de manière homogène une pression suffisante pour maintenir par effet hydrostatique la pression exercée sur l'empilement.

Selon un exemple, le volume de fritte de verre liquide recouvre au moins la première face et l'au moins une paroi externe de l'empilement de sorte à générer une contre-pression. Cela permet de maintenir une pression sur l'ensemble de l'empilement sans moyens mécaniques additionnels. Cela permet également d'assurer une seconde barrière et protéger l'au moins une paroi externe de l'empilement en cas de fuite localisée d'hydrogène.

Selon un exemple, le dôme présente une structure configurée de sorte à s'adapter à l'architecture de l'empilement. Le dôme permet ainsi de s'assurer de recouvrir correctement l'empilement et ainsi d'assurer la présence d'un volume interne suffisant pour assurer un volume de fritte permettant de réaliser le maintien par effet hydrostatique.

Selon un exemple, le dôme présente, au moins sur une portion, une surface interne bombée. La surface interne bombée permet ainsi de résister à la pression interne lorsque le gaz de couverture est mis sous pression et ainsi résiste à une pression suffisante pour maintenir en compression l'empilement.

Selon un exemple, le dôme et le support sont des pièces métalliques. Ainsi, l'ensemble des éléments permet de résister à des hautes températures et à des pressions utilisées dans le cadre de l'invention.

Selon un exemple, le dôme présente une ouverture sur une partie supérieure du dôme, et un bouchon de fermeture destinée à coopérer de manière complémentaire avec l'ouverture, l'ouverture présente une dimension typiquement comprise entre 1 et 5 cm de sorte permettre l'insertion de la fritte de verre. L'ouverture est ainsi assez grande pour permettre une insertion facile de la fritte de verre mais assez petite pour faciliter le montage d'un bouchon ou d'un raccord.

Selon un exemple, le réacteur comprenant un dispositif de serrage, le dispositif de serrage comprenant une couronne d'appui positionnée sur la première face de l'empilement et des liaisons mécaniques, les liaisons mécaniques étant configurées de sorte à relier et solidariser la couronne d'appui à la plaque d'appui. Le dispositif de serrage permet ainsi de maintenir l'empilement en contact avec la plaque d'appui à froid, c'est-à-dire avant la mise en fonctionnement du réacteur. Le maintien mécanique ne permet cependant pas un maintien optimal et il est nécessaire d'appliquer un maintien supplémentaire tel que décrit dans l'invention par effet hydrostatique pour maintenir l'empilement lorsque le réacteur est mis en fonctionnement.

Selon un exemple, le dispositif de serrage comprend une couronne isolante, la couronne isolante étant positionnée entre la couronne d'appui et la première face de l'empilement. La couronne isolante permet alors d'éviter les connections électriques entre le haut de l'empilement et la plaque d'appui qui est une plaque manifold via les liaisons mécaniques. Ainsi cela évite un mauvais fonctionnement du réacteur.

Selon un exemple, le dôme comprend une bride d'appui configurée pour fixer le dôme au support, le réacteur comprenant en outre une entretoise isolante positionnée entre la bride d'appui et la plaque d'appui du support. Le verre de trempage de l'empilement n'étant pas parfaitement isolant cette entretoise permet de limiter les fuites de courant parasites créées par une polarisation du dôme.

Selon un exemple, le dôme, l'entretoise isolante et la plaque d'appui sont configurées de sorte à être fixées ensemble en contact par un dispositif mécanique comprenant au moins une vis de serrage traversante. Le dispositif mécanique permet ainsi de plaquer le dôme sur le support afin d'assurer la compression de joints d'étanchéités placés entre chacune des interfaces. Le dispositif mécanique permet alors d'assurer une étanchéité du volume interne comprenant le verre liquide et l'empilement et ainsi assure un bon fonctionnement de la mise en compression de l'empilement lors de la montée en pression.

Selon un exemple, le dispositif mécanique comprend au moins un manchon isolant, l'au moins un manchon isolant étant configuré pour isoler l'au moins une vis de serrage traversante. L'au moins un manchon isolant permet ainsi de limiter les pertes de courants.

Selon un exemple, la température d'opération est supérieure à 650 °C. Les éléments du réacteur peuvent ainsi résister aux températures de fonctionnement de l'empilement. Additionnement, cela permet de s'assurer qu'un bain de verre est correctement créé autour de l'empilement afin d'assurer une pression homogène lors de la mise en fonctionnement du réacteur.

Selon un exemple, le réacteur comprend des blocs chauffants, les blocs chauffants étant positionnés au contact d'une surface externe du dôme. Les blocs chauffants permettent ainsi de former un bain de verre entourant au plus près l'empilement avec des dispositifs de chauffage situé également très proche de ces parois externes. Le bain de verre est ainsi créé rapidement et permet de s'assurer d'un bain homogène permettant l'application d'un effort par effet hydrostatique homogène.

Selon un exemple, le réacteur comprend un empilement, l'empilement comprenant :
- une plaque supérieure présentant une première face supérieure, la première face supérieure étant configurée pour être la première face de l'empilement,
- une superposition d'au moins une cellule électrochimique et d'au moins une plaque bipolaire, positionnées suivant une direction d'empilement E,
- une plaque inférieure présentant une deuxième face inférieure, la deuxième face inférieure étant configurée pour être la deuxième face de l'empilement.

**Selon un exemple,** le support est réalisé dans un matériau identique au matériau de la plaque supérieure et de la plaque inférieure. Ainsi, la réalisation de ces éléments dans un même matériau permet de limiter les contraintes thermomécaniques dut aux dilatations thermiques sur les étanchéités montées au niveau des interfaces.

Selon un exemple, la plaque supérieure et la plaque inférieure peuvent être réalisée dans des matériaux différents et présenter un coefficient d'expansion thermique proche. Ainsi, cela permet de limiter les contraintes thermomécaniques dut aux dilatations thermiques sur les étanchéités montées au niveau des interfaces.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'un premier élément sur un deuxième élément, ne signifie pas obligatoirement que les deux éléments sont directement au contact l'un de l'autre, mais signifie que le premier élément recouvre au moins partiellement le deuxième élément en étant, soit directement à son contact, soit en étant séparée de lui par au moins un autre élément. Ces éléments peuvent par exemple être des couches.

Une couche peut par ailleurs être composée de plusieurs sous-couches d'un même matériau ou de matériaux différents.

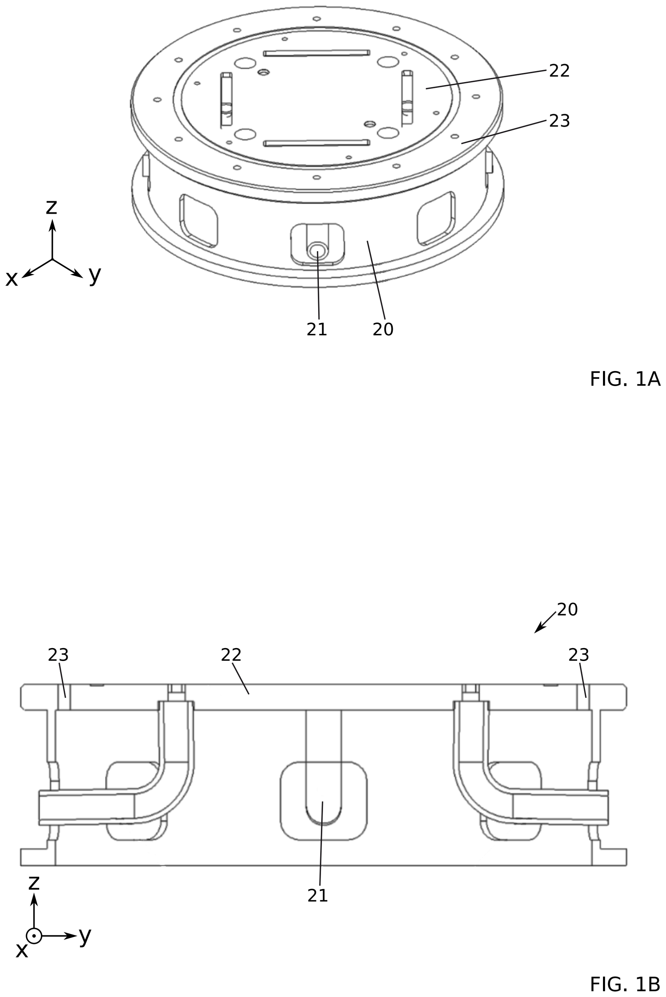

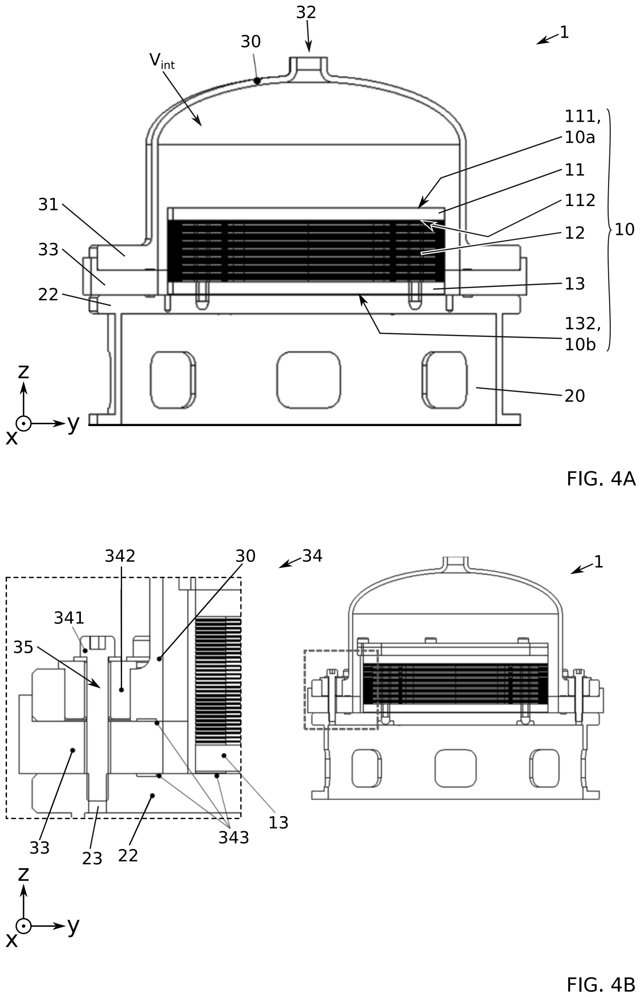

Un repère, de préférence orthonormé, comprenant les axes X, Y, Z est représenté en figures 1A à 6B.

Les termes « sensiblement », « environ », « de l'ordre de » signifient « à 10% près, de préférence à 5% près ».

Dans la description détaillée qui suit, il pourra être fait usage de termes tels que « horizontal », « vertical », « longitudinal », « transversal », « haut », « bas », « supérieur », « inférieur ». Ces termes doivent être interprétés de façon relative en relation avec la position normale de l'ensemble du réacteur électrochimique, et la direction normale de position sur un plan de celui-ci.

La présente invention concerne un réacteur électrochimique 1. Le réacteur chimique 1 va maintenant être décrit en référence aux figures 1A à 6B.

Le réacteur électrochimique 1 est configuré pour recevoir un empilement 10. L'empilement 10 présente une première face 10a et une deuxième face 10b. La deuxième face 10b est opposée à la première face 10a. La première face 10a et la deuxième face 10b peuvent avantageusement s'étendre dans un plan (XY). L'empilement 10 présente également au moins une paroi externe. L'au moins une paroi externe de l'empilement 10 relie avantageusement la première face 10a à la deuxième face 10b. L'empilement 10 est configuré pour fonctionner à une température dite température d'opération Tₒₚ. L'empilement 10 peut ainsi être placé dans une enceinte chauffante ou autrement appelé le réacteur électrochimique 1.

Le réacteur électrochimique 1 comprend un support 20. Un exemple de support 20 est illustré à la figure 1A et à la figure 1B. Le support 20 est configuré pour assurer le passage des gaz d'alimentation 21 de l'empilement 10. Le passage des gaz d'alimentation 21 peut être assurer par des tuyaux. Avantageusement, le support 20 peut alors présenter quatre tuyaux, deux tuyaux étant configurés pour assurer l'entrée des gaz d'alimentation dans l'empilement 10 et deux étant configurés pour assurer la sortie des gaz d'alimentation de l'empilement 10.

Le support 20 comprend une plaque d'appui 22. Avantageusement, l'empilement 10 est positionné de sorte à avoir sa deuxième face 10 en contact avec la plaque d'appui 22. Le support 20 et plus précisément la plaque d'appui 22 peut agir comme une embase de l'empilement 10. La plaque d'appui 22 peut également servir de plaque manifold.

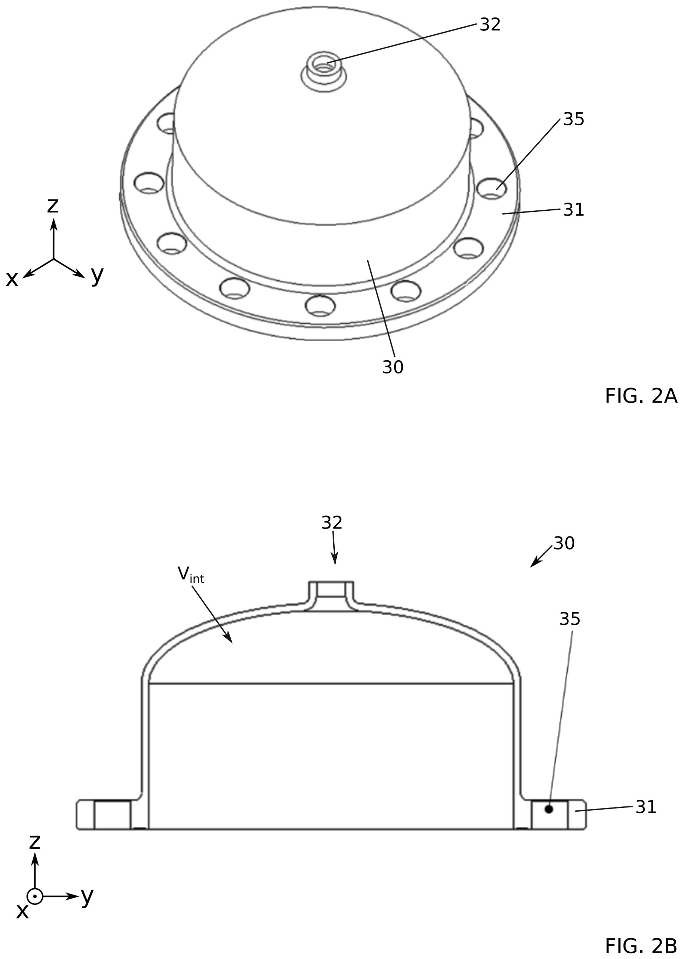

Le réacteur électrochimique 1 comprend en outre un dôme de fermeture 30. Le dôme de fermeture va maintenant être décrit en référence à la figure 2A et à la figure 2B.

Le dôme de fermeture 30 présente un volume interne Vᵢₙₜ. Le dôme de fermeture 30 et donc le volume interne Vᵢₙₜ est destiné à recevoir l'empilement 10. Le dôme de fermeture 30 est également destiné à être fixé hermétiquement sur le support 20. Préférentiellement au moins une partie du dôme de fermeture 30 est positionné en contact de la plaque d'appui 22.

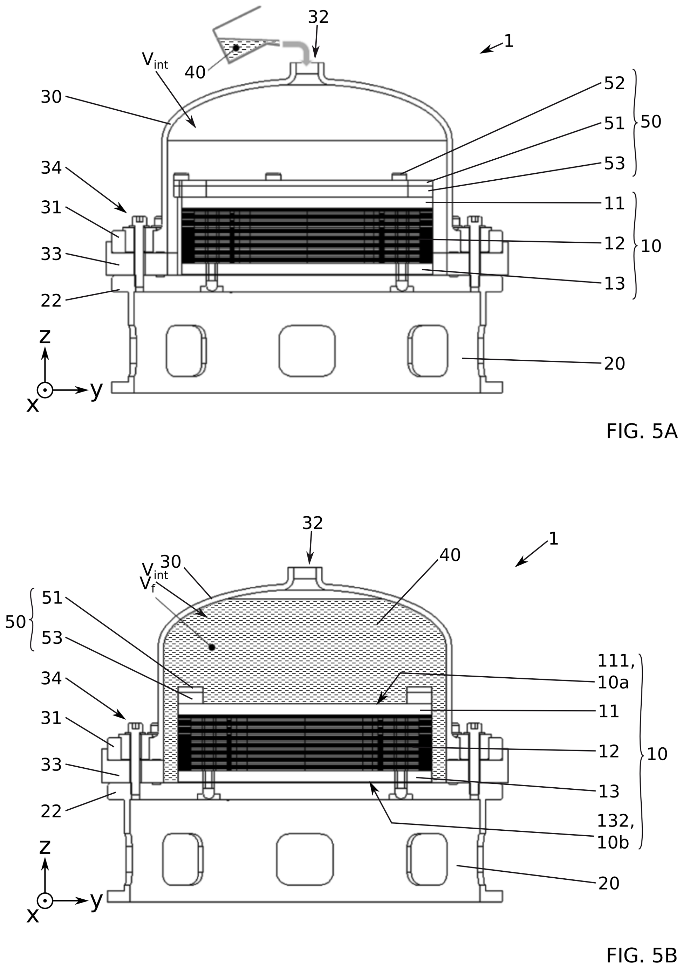

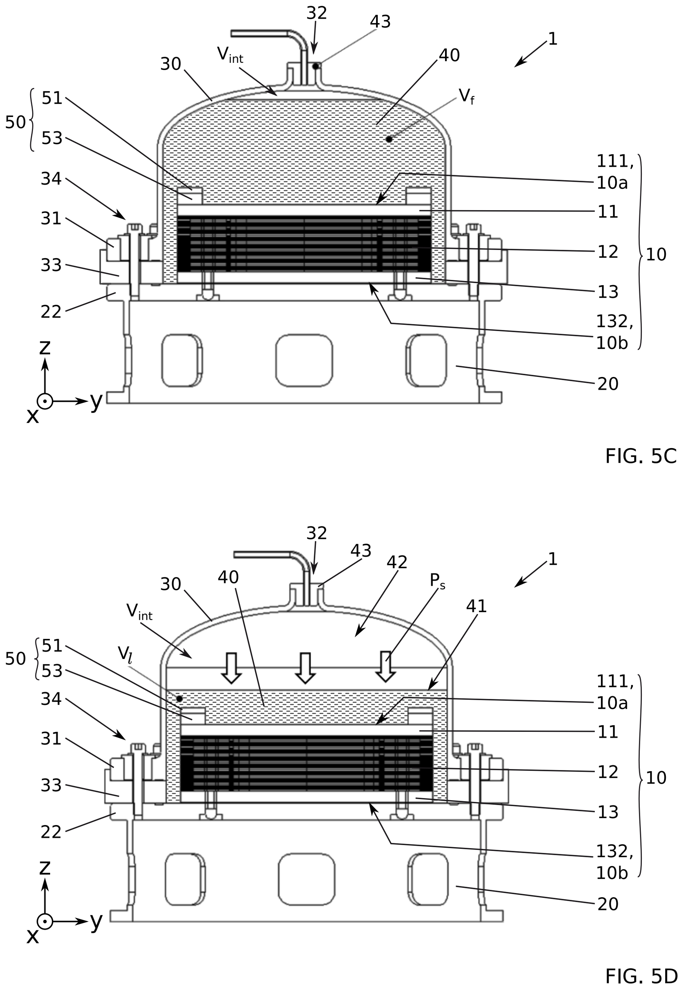

Le réacteur électrochimique 1 comprend également de la fritte de verre 40. La fritte de verre 40 présente un volume V_{f}. Le volume V_{f} de fritte de verre 40 est positionné dans le volume interne Vᵢₙₜ du dôme de fermeture 30. La fritte de verre 40 est configurée pour effectuer une transition de phase lorsque le réacteur électrochimique 1 atteint la température d'opération Tₒₚ. La transition de phase permet à la fritte de verre 40 de passer d'une forme solide (illustré par exemple sur la figure 5B) à une forme liquide (illustré par exemple sur la figure 5D). La fritte de verre 40 liquide présente alors un volume Vₗ, le volume Vₗ de fritte liquide est alors inférieur au volume interne Vᵢₙₜ du dôme de fermeture 30. De plus, la fritte de verre 40 liquide recouvre l'empilement 10. La fritte de verre 40 liquide recouvre l'empilement 10 de sorte à recouvrir la première face 10a de l'empilement 10. De préférence, la fritte de verre 40 liquide recouvre totalement l'empilement 10. La fritte de verre 40 liquide présente également une face supérieure dite surface libre 41.

Le volume interne Vᵢₙₜ du dôme de fermeture 30 comprend en outre un gaz dit gaz de couverture 42. Le gaz de couverture 42 est positionné au-dessus de la surface libre 41. Plus précisément, le gaz de couverture 42 est en contact de la surface libre 41 du volume de fritte liquide Vₗ. Le gaz de couverture 42 est alors configuré pour être mis sous pression. La mise sous pression peut être réalisée par un module de mise sous pression. Le module de mise sous pression peut être par exemple un système d'injection lié à un compresseur positionné à l'extérieur du réacteur électrochimique 1.

Le gaz de couverture 42 est mis sous pression à une pression de serrage Pₛ. La pression de serrage Pₛ est configuré de sorte à maintenir en compression l'empilement 10 sur la plaque d'appui 22 sous un effort mécanique proportionnel à la pression de serrage Pₛ. En effet, la mise sous pression du gaz de couverture 42 permet l'application d'un effort de compression sans mettre en œuvre de dispositifs mécaniques sur l'empilement 10 transmis par la fritte de verre 40 liquide.

Le bilan des forces dans l'ensemble mécanique, hors gravité, est le suivant : une force appliquée en interne par une pression des gaz d'alimentation 21 de l'empilement 10 qui est égale à une pression moyenne des gaz d'alimentation 21 multipliée par une surface interne de l'empilement 10 sur laquelle elle s'applique, la force appliqué par le gaz de couverture 42 sur l'empilement 10 qui est égale à la pression Pₛ du gaz de couverture 42 maintenu dans le dôme de fermeture 30 multiplié par une surface de la première face 10a de l'empilement 10.

Avec une pression de serrage Pₛ de gaz de couverture 42 supérieure à la pression des gaz d'alimentation 21 couplé à une surface de la première face 10a de l'empilement 10 supérieure à une surface interne de l'empilement 10, on génère un effort de compression sur la première face 10 de l'empilement 10 transmis par la fritte de verre 40 liquide.

La pression de serrage Pₛ à appliquer dépend des dimensions de l'empilement 10 et de la pression des gaz d'alimentation 21. Selon un exemple, la pression de serrage Pₛ est comprise entre 500hPa (hectopascal) et 200kPa (kilopascal). Par exemple, avec une première face 10a de l'empilement 10 qui présente un diamètre de 112,5mm (millimètres), la pression nécessaire pour générer l'effort de compression est de l'ordre de 500 hPa. Ces valeurs de pression de pression Pₛ faibles, permettent d'envisager la réalisation d'une enceinte pressurisée fonctionnant à haute température compatible tant au niveau des interfaces d'étanchéité que des contraintes thermomécaniques. Les contraintes thermomécaniques étant limitées pour un usage à haute température.

La fritte de verre 40 liquide permet ainsi une transmission uniforme sur l'ensemble de l'empilement 10 de l'effort de compression. La fritte de verre 40 liquide permet en outre d'éviter des fuites de gaz provenant de l'empilement 10. En effet, selon un exemple, le volume Vₗ de fritte de verre 40 liquide recouvre au moins la première face 10a et l'au moins une paroi externe de l'empilement 10 de sorte à générer une contre-pression. Cela permet ainsi d'assurer une seconde barrière et protéger l'au moins une paroi externe de l'empilement 10 en cas de fuite localisée d'hydrogène. La mise en compression de la fritte de verre 40 garanti de plus une meilleure étanchéité en générant une contre-pression interdisant le bullage des gaz fuyards dans la matrice vitreuse.

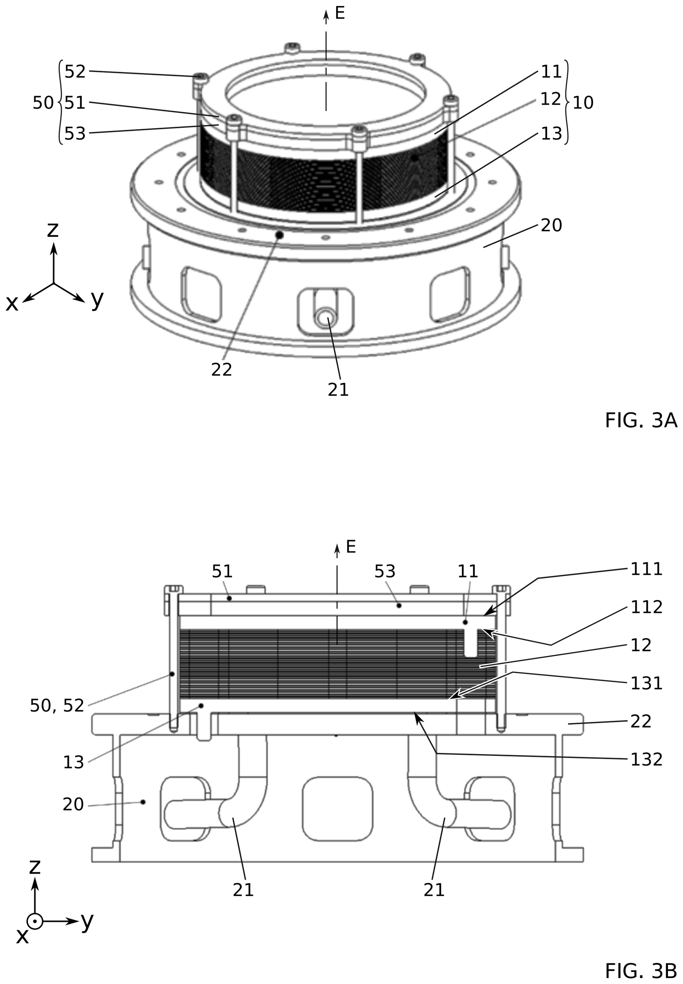

Comme explicité précédemment, le réacteur 1 est configuré pour recevoir un empilement 10. L'empilement 10 est positionné sur la plaque d'appui 22 du support 20. Un empilement 10 possible est représenté aux figures 3A et 3B et va maintenant être décrit.

Selon un exemple, l'empilement 10 comprend une plaque supérieure 11. La plaque supérieure 11 peut présenter une première face 111. La première face 111 de la plaque supérieure 11 peut être assimilée à la première face 10a de l'empilement 10. L'empilement 10 peut comprendre également une plaque inférieure 13. La plaque inférieure 13 présente une deuxième face 132. La deuxième face 132 peut être assimilée à la deuxième face 10b de l'empilement 10. Entre la plaque supérieure 11 et la plaque inférieure 13, l'empilement 10 peut comprendre une superposition 12 d'au moins une cellule électrochimique et d'au moins une plaque bipolaire. Avantageusement, la plaque inférieure 13, la superposition 12 et la plaque supérieure 11 sont superposées les unes sur les autres suivant une direction d'empilement E. Selon un exemple, le réacteur électrochimique 1 comprend un empilement 10 tel que décrit précédemment.

La plaque supérieure 11 et la plaque inférieure 13 peuvent avantageusement être réalisée dans un même matériau. De plus, le support 20 et plus précisément la plaque d'appui 22 peut être réalisée dans un matériau identique au matériau de la plaque supérieure 11 et de la plaque inférieure 13. Au moins une portion de la plaque d'appui 22 et les plaques supérieure 11 et inférieure 13 vont être soumises à des températures élevées lors du fonctionnement du réacteur électrochimique 1. Ainsi, la réalisation de ces éléments dans un même matériau permet de limiter les contraintes thermomécaniques dut aux dilatations thermiques sur les étanchéités montées au niveau des interfaces.

La plaque supérieure 11 et la plaque inférieure 13 peuvent avantageusement être réalisées dans des matériaux différents et présentant un coefficient d'expansion thermique proche. On entend par coefficient thermique proche un coefficient présentant une différence l'un par rapport à l'autre n'excédant pas une différence de plus ou moins 10⁻⁶ °C⁻¹. Ainsi, cela permet de limiter les contraintes thermomécaniques dues aux dilatations thermiques sur les étanchéités montées au niveau des interfaces.

Selon un exemple, le réacteur électrochimique 1 comprend un dispositif de serrage 50. Le dispositif de serrage 50 est configuré pour maintenir la compression de l'empilement 10 à froid. Ainsi le dispositif de serrage 50 peut être positionné de sorte à appliquer une pression en direction du support 20 sur la première face 10a de l'empilement 10.

Le dispositif de serrage 50 peut alors comprendre une couronne d'appui 51. La couronne d'appui 51 est alors configurée pour positionnée sur la première face 10a de l'empilement 10. De manière analogue, la couronne d'appui 51 est positionnée sur la première face supérieure 111 de la plaque supérieure 11 de l'empilement 10. Avantageusement, la couronne d'appui 51 ne recouvre pas totalement la surface de la première face 10a de l'empilement 10. La couronne d'appui 51 peut alors être positionnée sur une périphérie de la première face 10a de l'empilement 10.

Le dispositif de serrage 50 peut comprendre également des liaisons mécaniques 52. Les liaisons mécaniques 52 sont configurées de sorte à relier la couronne d'appui 51 à la plaque d'appui 22. Plus précisément, les liaisons mécaniques 52 sont configurées pour solidariser la couronne d'appui 51 à la plaque d'appui 22. Les liaisons mécaniques 52 permettent ainsi d'assurer un contact entre la deuxième face 10b de l'empilement 10 et la plaque d'appui 22 lorsque le réacteur 1 est à froid. Les liaisons mécaniques 52 peuvent par exemple être des tirants de compression. Les liaisons mécaniques 52 sont alors positionnées sur une périphérie de l'empilement 10. Le dispositif de serrage 50 présente au moins deux liaisons mécaniques 52. Les au moins deux liaisons mécaniques 52 sont positionnées de sorte à avoir au moins une symétrie sur l'axe d'empilement E. Ainsi, la force de compression appliquée est homogène sur l'ensemble de l'empilement 10.

Avantageusement, le dispositif de serrage 50 comprend également une couronne isolante 53. La couronne isolante 53 est alors positionnée entre la couronne d'appui 51 et la première face 10a de l'empilement 10. La couronne isolante 53 permet alors d'éviter les connections électriques entre le haut de l'empilement 10 et la plaque d'appui 22 qui est une plaque manifold via les liaisons mécaniques 52. Tout comme la couronne d'appui 51, la couronne isolante 53 est positionnée sur une périphérie de la première face 10a de l'empilement 10. Préférentiellement, la couronne isolante 53 et la couronne d'appui 51 présente les mêmes dimensions.

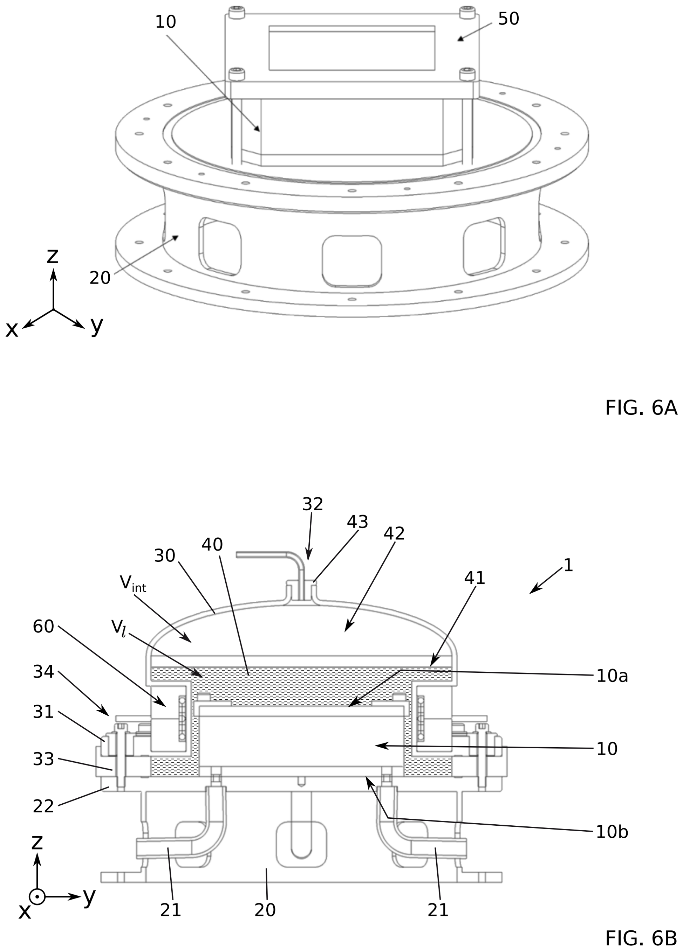

L'empilement 10 peut présenter une forme cylindrique ou parallélépipédique. Les figures 3A à 5D représentent de façon non limitative un empilement 10 cylindrique. Les figures 6A et 6B représentent de façon non limitative un empilement 10 parallélépipédique. De ce fait, afin d'assurer un bon fonctionnement, le dôme de fermeture 30 doit être adapté à la forme de l'empilement 10. Le dôme de fermeture 30 peut alors présenter une structure configurée de sorte à s'adapter à l'architecture de l'empilement 10.

Une fois l'empilement 10 assemblé et/ou positionné sur le support 20, le dôme 30 peut être mis en place au-dessus de l'empilement 10.

Le dôme 30 peut comprendre avantageusement, une bride d'appui 31. La bride d'appui 31 est configurée pour fixer le dôme 30 au support 22. Plus précisément la bride d'appui 31 comprend une pluralité de trous 35 (illustrés en figure 2A). Les trous 35 sont alors configurés pour s'aligner à des ouvertures 23 (illustrées en figure 1A) présentent sur la plaque d'appui 22 du support 20. La bride d'appui 31 est ainsi positionnée en regard de la plaque d'appui 22.

Le réacteur 1 peut comprendre en outre une entretoise isolante 33 positionnée entre la bride d'appui 31 et la plaque d'appui 22 du support 20. L'entretoise isolante 33 s'étend avantageusement seulement entre la bride d'appui 31 et la plaque d'appui 22. Le verre de trempage de l'empilement 10 n'étant pas parfaitement isolant cette entretoise 33 permet de limiter les fuites de courant parasites créées par une polarisation du dôme 30.

Ainsi, le dôme 30, l'entretoise isolante 33 et la plaque d'appui 22 peuvent être configurées de sorte à être fixées ensemble en contact par un dispositif mécanique 34. Le dispositif mécanique 34 permet ainsi de plaquer le dôme 30 sur le support 20 afin d'assurer la compression de joints d'étanchéités 343 placés entre chacune des interfaces. Le dispositif mécanique 34 peut comprendre alors au moins une vis de serrage traversante 341. L'au moins une vis de serrage traversante 341 est configurée pour passer au travers d'au moins un trou 35 et à s'insérer dans une ouverture 23 du support 20. L'au moins une ouverture 23 peut alors présenter un pas de vis de sorte à permettre le vissage de la vis de serrage traversante 341. Le dispositif mécanique 34 comprend autant de vis de serrage traversante 341 qu'il y a de trous 35 dans la bride d'appui 31.

Préférentiellement, le dispositif mécanique 34 comprend également au moins un manchon isolant 342. L'au moins un manchon isolant 342 est alors configuré pour isoler l'au moins une vis de serrage traversante 341. L'au moins un manchon isolant 342 permet ainsi de limiter les pertes de courants. Ainsi, le dispositif mécanique 34 comprend autant de manchon isolant 342 qu'il comprend de vis de serrage traversante 341.

Additionnellement, le dôme de fermeture 30 peut présenter au moins sur une partie supérieure une surface interne bombée. La surface interne bombée permet ainsi de résister à la pression interne lorsque le gaz de couverture 42 est mis sous pression. On entend par surface interne bombée une surface interne convexe.

De même, le dôme 30 peut présenter sur cette partie supérieure une ouverture 32. L'ouverture 32 est configurée pour permettre l'insertion de la fritte de verre 40 dans le réacteur 1 une fois le dôme 30 fixé sur le support 20. Pour ce faire l'ouverture 32 présente une dimension typiquement comprise entre 1 et 5 cm. L'ouverture 32 est ainsi assez grande pour permettre une insertion facile de la fritte de verre 40 mais assez petite pour faciliter le montage d'un bouchon ou d'un raccord.

Selon un exemple, le dôme 30 peut présenter un bouchon de fermeture 43. Le bouchon 43 est par exemple représenté aux figures 5C et 5D. Le bouchon 43 est destiné à coopérer de manière complémentaire avec l'ouverture 32. Le bouchon 43 permet ainsi de fermer le dôme 30 est ainsi de rendre hermétique le volume interne Vᵢₙₜ. Le bouchon 43 est ainsi configuré pour assurer une étanchéité aux gaz en pression. Le bouchon 43 est avantageusement fixé à l'ouverture 32 par soudure ou par un joint, par exemple par un joint métallique. Le bouchon 43 est ainsi fixé de manière étanche sur le dôme 30. Le bouchon de fermeture 43 peut présenter avantageusement un tuyau. Le tuyau peut alors être configuré pour permettre la réalisation d'un piquage configuré pour insérer le gaz de couverture 42. Le tuyau peut alors être compris dans le module de mise sous pression. Le gaz de couverture 42 inséré par le tuyau peut alors être sous pression.

Selon un exemple, l'ensemble des éléments est configuré de sorte à résister à des hautes températures et à des pressions telle que décrites précédemment. Avantageusement, le dôme 30 est ainsi une pièce métallique. Plus précisément, le dôme 30 est réalisé dans un alliage compatible avec une utilisation à haute température. De même, le support 20 est également une pièce métallique. Le support 20 est donc également réalisé dans un alliage compatible avec une utilisation à haute température. On entend par haute température, par exemple, des températures comprises entre 600 °C et 900 °C.

Selon un exemple, la température d'opération Tₒₚ est supérieure à 650 °C. De préférence, la température d'opération Tₒₚ est inférieure à 900 °C. Les éléments du réacteur 1 peuvent ainsi résister aux températures de fonctionnement de l'empilement 10. De plus, la formulation de la fritte de verre 40 est choisie pour que la température du point de fusion du verre soit inférieure à la température d'opération Tₒₚ de l'empilement 10. La formulation du verre 40 assure également un bain de verre vitreux, visqueux, faiblement cristallisé ou non cristallisé. Lors de la fusion initiale de la fritte 40, le volume du verre Vₗ diminue (entre 30 et 50%). Afin de garantir qu'une fois fondue, la matrice vitreuse recouvre complètement l'empilement, le volume Vᵢₙₜ du dôme 30 doit être dimensionné pour pouvoir être rempli d'un volume V_{f} suffisant de fritte de verre 40.

Ainsi, lors du fonctionnement du réacteur 1, on est assuré que le verre 40 soit sous une forme liquide et donc assure avec le gaz de couverture mis sous pression un effort de compression sur l'empilement 10. Une fois l'empilement 10 complétement immergé par le verre liquide, la pressurisation du gaz de couverture 42 permet alors de le mettre en compression sous un effort mécanique proportionnel à la pression de serrage Pₛ. Par effet hydrostatique la pression Pₛ exercée sur la face libre 41 du verre liquide est transmise intégralement et de manière parfaitement homogène sur la plaque supérieure 11 de l'empilement 10 et ce sans nécessiter des composants mécaniques, comme des répartiteurs d'effort ou des cannes/plateaux d'appui. L'effort de compression qui est transmis à l'empilement 10 est ajustable très facilement en faisant varier la pression de serrage Pₛ. Le dispositif proposé constitue ainsi un système actif permettant d'ajuster en continu l'effort de compression en fonction de la pression interne de l'empilement 10.

Selon un exemple illustré aux figures 6A et 6B, le réacteur 1 comprend des blocs chauffants 60. Les blocs chauffants 60 peuvent alors être positionnés au contact d'une surface externe du dôme 30. Les blocs chauffants 60 permettent ainsi de former un bain de verre entourant au plus près l'empilement 10 avec des dispositifs de chauffage situé également très proche de ces parois externes.

Le procédé de mise en pression du réacteur électrochimique 1 peut alors comprendre les étapes suivantes.

Le procédé peut comprendre un positionnement de l'empilement 10 sur le support 20.

Le procédé peut comprendre ensuite un positionnement du dôme 30 sur le support 20. Le dôme 30 est alors positionné de sorte à entourer l'empilement 10. Le dôme 30 est ensuite fixé au support 20. **Il** peut être fixé via un positionnement du dispositif mécanique de serrage 34.

Le procédé comprend ensuite un remplissage du dôme 30 avec un volume V_{f} de fritte de verre 40. Le remplissage est alors effectué par l'insertion de la fritte de verre 40 par l'ouverture 32 située sur une partie supérieure du dôme.

Le procédé comprend ensuite une fixation d'un bouchon 43 dans l'ouverture 32. Cette fixation peut être réalisée par soudure ou via un joint. Cette fixation est configurée pour rendre le volume interne Vᵢₙₜ du dôme 30 hermétique.

Le procédé comprend ensuite une augmentation de la température dans le réacteur 1 de sorte à atteindre la température d'opération Tₒₚ. Cette étape conduit à la fonte de la fritte 40 qui devient un bain de verre vitreux liquide présentant un volume Vₗ à la température d'opération.

Enfin, le procédé comprend une mise sous pression du réacteur 1 jusqu'à une pression de serrage Ps. Cette mise sous pression est réalisée par un module de mise sous pression. Le module peut comprendre un compresseur relié à un tuyau présent dans le bouchon 43. Le module de mise sous pression peut ainsi directement insérer le gaz de couverture 42 dans le volume interne du dôme 30 sous pression.

L'invention n'est pas limitée aux modes de réalisations précédemment décrits et s'étend à tous les modes de réalisation couverts par l'invention.

### REFERENCES NUMERIQUES

1 : Réacteur électrochimique
10 : empilement
10a : première face
10b : deuxième face
11 : plaque supérieure
111 : première face supérieure
112 : deuxième face supérieure
12 : alternance de cellules électrochimiques et de plaques bipolaires
13 : plaque inférieure
131 : première face inférieure
132 : deuxième face inférieure
20 : support
21 : gaz d'alimentation
22 : plaque d'appui
23 : ouvertures
30 : dôme de fermeture
31 : bride d'appui
32 : ouverture
33 : entretoise isolante
34 : dispositif mécanique de serrage
341 : vis de serrage
342 : manchons isolants
343 : joints
35 : trous
40 : fritte de verre
41 : face libre du volume de fritte de verre liquide
42 : gaz de couverture
43 : bouchon de fermeture
50 : dispositif de serrage
51 : couronne d'appui
52 : liaison mécanique (tirants de compression)
53 : couronne isolante
60 : blocs chauffants
Tₒₚ : température d'opération de l'empilement
E : direction d'empilement
Vᵢₙₜ : volume interne de dôme
V_{f} : volume de fritte de verre
Vₗ : volume de fritte de verre liquide
Pₛ : pression de serrage

## Revendications

1. Réacteur électrochimique (1), configuré pour recevoir un empilement (10) présentant une première face (10a) et une deuxième face (10b) opposée à la première face (10a) et au moins une paroi externe reliant la première face (10a) à la deuxième face (10b) et configuré pour fonctionner à une température d'opération (Tₒₚ), le réacteur (1) comprenant :
• un support (20) configuré pour assurer le passage des gaz d'alimentation (21) de l'empilement (10), le support comprenant une plaque d'appui (22), l'empilement (10) étant positionné de sorte à avoir sa deuxième face (10b) en contact avec la plaque d'appui (22),
• un dôme de fermeture (30), présentant un volume interne (Vᵢₙₜ), destiné à recevoir l'empilement (10) et à être fixé hermétiquement sur le support,
• de la fritte de verre (40) présentant un volume de fritte de verre (V_{f}) et positionnée dans le volume interne (Vᵢₙₜ), et configurée pour effectuer une transition de phase à température d'opération (Tₒₚ) de l'empilement (10) de sorte à former de la fritte de verre (40) liquide présentant un volume de fritte de verre liquide (Vₗ) et configurée en outre pour recouvrir l'empilement (10), le volume de fritte de verre liquide (Vₗ) étant inférieur au volume interne (Vᵢₙₜ) et présentant une face supérieure dite surface libre (41),
**caractérisé en ce que** le volume interne (Vᵢₙₜ) comprend en outre un gaz dit gaz de couverture (42), le gaz de couverture (42) étant positionné au-dessus et en contact de la surface libre (41) du volume de fritte liquide (Vₗ), le gaz de couverture (42) étant configuré pour être mis sous pression à une pression de serrage (Pₛ) par un module de mise sous pression, la pression de serrage (Pₛ) étant configuré de sorte à maintenir en compression l'empilement (10) sur la plaque d'appui (22) sous un effort mécanique proportionnel à la pression de serrage (Pₛ).

2. Réacteur électrochimique (1) selon la revendication précédente dans lequel la pression de serrage (Pₛ) est comprise entre 500 hPa et 200kPa.

3. Réacteur électrochimique (1) selon l'une quelconque des revendications précédentes dans lequel le volume de fritte de verre liquide (Vₗ) recouvre au moins la première face (10a) et l'au moins une paroi externe de l'empilement (10) de sorte à générer une contre-pression.

4. Réacteur électrochimique (1) selon l'une quelconque des revendications précédentes dans lequel le dôme (30) présente une structure configurée de sorte à s'adapter à l'architecture de l'empilement (10).

5. Réacteur électrochimique (1) selon l'une quelconque des revendications précédentes dans lequel le dôme (30) présente, au moins sur une portion, une surface interne bombée.

6. Réacteur électrochimique (1) selon l'une quelconque des revendications précédentes dans lequel le dôme (30) et le support (20) sont des pièces métalliques.

7. Réacteur électrochimique (1) selon l'une quelconque des revendications précédentes dans lequel le dôme (30) présente une ouverture (32) sur une partie supérieure du dôme (30), et un bouchon de fermeture (43) destinée à coopérer de manière complémentaire avec l'ouverture (32), l'ouverture (32) présente une dimension typiquement comprise entre 1 et 5 cm de sorte permettre l'insertion de la fritte de verre (40).

8. Réacteur électrochimique (1) selon l'une quelconque des revendications précédentes comprenant un dispositif de serrage (50), le dispositif de serrage (50) comprenant une couronne d'appui (51) positionnée sur la première face (10a) de l'empilement (10) et des liaisons mécaniques (52), les liaisons mécaniques (52) étant configurées de sorte à relier et solidariser la couronne d'appui (51) à la plaque d'appui (22), de préférence le dispositif de serrage (50) comprend une couronne isolante (53), la couronne isolante (53) étant positionnée entre la couronne d'appui (51) et la première face (10a) de l'empilement (10).

9. Réacteur électrochimique (1) selon l'une quelconque des revendications précédentes dans lequel le dôme (30) comprend une bride d'appui (31) configurée pour fixer le dôme (30) au support (22), le réacteur comprenant en outre une entretoise isolante (33) positionnée entre la bride d'appui (31) et la plaque d'appui (22) du support (20).

10. Réacteur électrochimique (1) selon la revendication précédente dans lequel le dôme (30), l'entretoise isolante (33) et la plaque d'appui (22) sont configurées de sorte à être fixées ensemble en contact par un dispositif mécanique (34) comprenant au moins une vis de serrage traversante (341), de préférence le dispositif mécanique (34) comprend au moins un manchon isolant (342), l'au moins un manchon isolant (342) étant configuré pour isoler l'au moins une vis de serrage traversante (341).

11. Réacteur électrochimique (1) selon l'une quelconque des revendications précédentes dans lequel la température d'opération (Tₒₚ) est supérieure à 650 °C.

12. Réacteur électrochimique (1) selon l'une quelconque des revendications précédentes dans lequel le réacteur (1) comprend des blocs chauffants (60), les blocs chauffants (60) étant positionnés au contact d'une surface externe du dôme (30).

13. Réacteur électrochimique (1) selon l'une quelconque des revendications précédentes comprenant un empilement (10), l'empilement (10) comprenant :
• une plaque supérieure (11) présentant une première face supérieure (111), la première face supérieure (111) étant configurée pour être la première face (10a) de l'empilement (10),
• une superposition (12) d'au moins une cellule électrochimique et d'au moins une plaque bipolaire, positionnées suivant une direction d'empilement E,
• une plaque inférieure (13) présentant une deuxième face inférieure, la deuxième face inférieure (132) étant configurée pour être la deuxième face (10b) de l'empilement (10).

14. Réacteur électrochimique (1) selon la revendication précédente dans lequel le support (20) est réalisé dans un matériau identique au matériau de la plaque supérieure (11) et de la plaque inférieure (13).

15. Procédé de mise en pression d'un réacteur électrochimique (1) selon la revendication 7 dans lequel le procédé comprend :
• un positionnement de l'empilement (10) sur le support (20),
• un positionnement et une fixation du dôme (30) sur le support (20) de sorte à entourer l'empilement (10),
• un remplissage du dôme (30) avec de la fritte de verre (40) par une ouverture (32),
• une fixation d'un bouchon (43) dans l'ouverture (32) de sorte à rendre le volume interne (Vᵢₙₜ) du dôme (30) hermétique,
• une augmentation de la température dans le réacteur de sorte à atteindre la température d'opération (Tₒₚ),
• une mise sous pression du réacteur (1) jusqu'à une pression de serrage (Pₛ) par le module de mise sous pression.
